(19) Europäisches Patentamt
European Patent Office
Office européen des brevets

(11) Veröffentlichungsnummer: **0 398 151 A2**

# (12) EUROPÄISCHE PATENTANMELDUNG

(21) Anmeldenummer: **90108770.0**

(51) Int. Cl.5: **C08F 220/14, C08F 6/00**

(22) Anmeldetag: **10.05.90**

(30) Priorität: **18.05.89 DE 3916129**

(43) Veröffentlichungstag der Anmeldung:
**22.11.90 Patentblatt 90/47**

(84) Benannte Vertragsstaaten:
**AT BE CH DE DK ES FR GB IT LI NL SE**

(71) Anmelder: **RÖHM GMBH**
**Kirschenallee**
**D-6100 Darmstadt(DE)**

(72) Erfinder: **Langerbeins, Klaus, Dr.**
**Am oberen Luisenpark 17**
**D-6800 Mannheim(DE)**
Erfinder: **Trabitzsch, Hans, Dr.**
**Weingartenstrasse 7**
**D-6104 Seeheim-Jugenheim(DE)**
Erfinder: **Fölsch, Karl-Josef, Dr.**
**Backhaushohl 19**
**D-6500 Mainz(DE)**
Erfinder: **Klesse, Wolfgang, Dr.**
**Tucholskyweg 47**
**D-6500 Mainz 31(DE)**

## (54) Polymeres assoziatives Verdickungsmittel in Pulverform.

(57) Die Erfindung betrifft ein assoziatives Verdickungsmittel auf Polymethacrylat-Basis in Pulverform, mit einem Molekulargewicht Mw von 50 000 bis 300 000, das durch Copolymerisation von Methylmethacrylat, Acrylsäure und/oder Methacrylsäure und einem langkettigen Acrylsäure-und/oder Methacrylsäureester, der im Copolymerisat eingebaut als Assoziativgruppe wirkt, aufgebaut und aus seiner vorwiegend wäßrigen Lösung oder Dispersion durch Sprühtrocknen erhalten wird.

EP 0 398 151 A2

## Gebiet der Erfindung

Die Erfindung betrifft in wäßrigem Medium lösliche Polymere auf Methacrylat-Basis, die sich vor allem als assoziative Verdicker einsetzen lassen, in einer anwendungstechnisch vorteilhaften Form.

Stand der Technik

Verdickungsmittel dienen im allgemeinen dazu die Viskosität von Lösungen oder von dispersen Systemen zu erhöhen. Viskositätserhöhende Stoffe sind meist organische hochmolekulare Substanzen, wozu u.a. auch vollsynthetische Polymere auf Acrylsäure- und/oder Methacrylsäure-Basis zählen. Solche polymeren Carbonsäuren werden üblicherweise in ihrer Salzform als wasserlösliche Verdickungsmittel eingesetzt. Sie entfalten die vorgesehene verdickende Wirkung erst, wenn als Polymere solche mit sehr hohem Molekulargewicht, d.h. mit Werten von > $10^6$, zum Einsatz gelangen. Untersuchungen an Copolymerisaten von Methacrylsäure mit Methylmethacrylat und Ethylacrylat zeigten, daß deren Verdickerwirkung und ihr Viskositätsverhalten bei gleichem Säuregehalt stark vom Methylmethacrylat-Ethylacrylat-Verhältnis als Comonomeren abhängen, und diese Eigenschaften mit höherem Methylmethacrylat-Anteil, bei gleichen Polymerisatmengen, erheblich reduziert sind (Rheological properties of Latexes; Frank L. Saunders in 13th Annual Short Course, Advances in Emulsion Polymerization and Latex Technology, Vol. II, June 7 - 11, 1982, Emulsion Polymers Institute, Leigh University, Bethlehem, Pennsylvania, pg 42 - 47). Diese sehr hochmolekularen Substanzen bereiten bei ihrer Herstellung und ihrer Handhabung, insbesondere wegen ihrer gelartigen und schleimigen Beschaffenheit, oft Schwierigkeiten.

Vollsynthetische Polymere, die mit vorhandenen Carboxylgruppen wiederum wasserlöslich gemacht werden und verdickend wirken, deren Verdickerwirkung aber nicht auf extrem hohen Molekulargewichten der Polymeren beruht, sondern durch Assoziation der Makromoleküle über darin in geringen Mengen eingebauten langkettigen aliphatischen Seitengruppen bewirkt wird, lassen sich in Lösung oder als Emulsionspolymerisate herstellen und aus dieser Form heraus anwenden.

So beschreibt die DE-A 34 04 537 Lösungen von Copolymerisaten und Dispersionen von Emulsionscopolymerisaten, die als assoziative Verdicker in wäßrigen Funktionsflüssigkeiten, wie Hydraulik- und Metallbearbeitungsflüssigkeiten Verwendung finden. Die dort vorgeschlagenen Copolymerisate sind, wie die zahlreichen Beispiele ausweisen, alle auf Basis Ethylacrylat als dem Hauptmonomerbestandteil der polymeren Verdickungsmittel hergestellt.

Dispersionscopolymerisate ebenfalls auf Ethylacrylat-Basis mit ungesättigten Carbonsäuren und (Meth)-Acrylestern von Polyglykoletheralkoholen, die im Esterrest mit Alkyl- bzw. Alkylarylestern abgesättigt sind, und in wäßrigem Medium bei Alkalizugabe verdickend wirken, werden weiter in EP 11 806 beschrieben.

Diese beschriebenen und in praxi verwendeten assoziativen Verdickungsmittel mit Ethylacrylat als Basis-Monomerem sind für die vorgesehenen Verwendungszwecke hervorragend geeignet, haben aber in der Form , in der sie angewendet werden - Lösungs- oder Dispersionspolymerisate - auch Nachteile. Vor allem die Herstellung anwendungstechnisch vorteilhafter Pulver von polymeren assoziativen Verdickungsmitteln läßt sich aus den auf Ethylacrylatbasierenden Lösungs- bzw. Emulsionscopolymerisaten mit der gängigen und vorteilhaften Technik der Sprühtrocknung nicht bewerkstelligen. Versuche dazu lieferten immer klebrige, anwendungstechnisch unvorteilhafte Polymermassen.

Aufgabe und Lösung

Der Erfindung liegt die Aufgabe zugrunde, polymere assoziative Verdickungsmittel zur Verfügung zu stellen, denen neben den bekannten Vorteilen bei ihrer Anwendung, für ihre Handhabung, noch die erfindungsgemäßen Vorteile als Pulver eigen sind.

Die Lösung dieser Aufgabe besteht darin, daß die Copolymerisate neben den funktionell notwendigen polymerisierbaren Carbonsäuren, insbesondere der Acrylsäure und/oder Methacrylsäure, mit Methylmethacrylat als Basismonomerem aufgebaut sind.

Die Erfindung betrifft danach ein:

Assoziatives Verdickungsmittel auf Polymethacrylat-Basis in Pulverform, mit einem Molekulargewicht Mw von 10 000 bis 300 000, zur Verwendung in wäßrigen Systemen, dadurch gekennzeichnet, daß das Polymere durch Polymerisation aus:

a) 20 bis 90 Gew.-% Methylmethacrylat,

b) 5 bis 80 Gew.-% Acrylsäure und/oder Methacrylsäure und

c) 0,1 bis 10 Gew.-% langkettigen Estern der Acrylsäure und/oder Methacrylsäure,

wobei die Säuregruppen auch teilweise oder vollständig durch Basenzugabe vor oder nach der Polymerisation neutralisiert sein können, hergestellt wird, und das Polymere durch Sprühtrocknung aus seiner Lösung oder Dispersion in Pulverform erhalten wird.

Die Erfindung ist im Hinblick auf den gegebenen Stand der Technik, wie beispielsweise auf Saunders, überraschend, da mit den erfindungsgemäßen Verdickungsmitteln auch solche mit Methylmethacrylat hergestellte Copolymerisate als gute Verdicker wirksam sind und diese in vorteilhafter Pulverform herstellbar und handhabbar sind.

Die erfindungsgemäßen Copolymerisate werden durch radikalisch initiierte Polymerisation, insbesondere durch Lösungs- oder vor allem durch Emulsionspolymerisation hergestellt und aus den dabei erhaltenen Lösungen oder Dispersionen durch Sprühtrocknung in die Pulverform überführt. Das Polymerisatpulver kann wesentlich einfacher verpackt, versandt und gelagert werden, als die entsprechenden Polymeren mit Lösemitteln oder Dispersionsmitteln. Beim Anwenden wird es dann in teilweiser bzw. vollständig neutralisierter Form als Verdicker wäßriger Systeme mit erheblicher viskositätserhöhender Wirkung, wie beispielsweise für wäßrige Hydraulikflüssigkeiten eingesetzt, oder es kann als Festprodukt Trockenzementgemischen, wie sie beispielsweise zum Fließenkleben eingesetzt werden, zugemischt werden, deren Fließeigenschaften dadurch hervorragend angehoben werden.

Durchführung der Erfindung

Für die Herstellung der durch Sprühtrocknung in Pulverform gewinnbaren und als assoziative Verdikkungsmittel zu verwendenden Copolymerisate werden als Monomere eingesetzt:

a) Methylmethacrylat, und in Mengen von 0 bis 10 Gew.-% weitere Methacrylsäurealkylester mit $C_2$- bis $C_4$-Alkylresten,

b) Acrylsäure und/oder Methacrylsäure, vor allem Methacrylsäure, in der Säureform und/oder als Salze und

c) langkettige Ester der Acrylsäure und/oder Methacrylsäure der allgemeinen Formel I

$$H_2C = \overset{R}{\overset{|}{C}} - \overset{O}{\overset{\|}{C}} - O -(-CH_2 - \overset{R_1}{\overset{|}{CH}} - O -)_n R_2 \qquad I,$$

in der

R, $R_1$ = H oder $CH_3$

$R_2$ = $C_8$- bis $C_{20}$-Alkylreste oder Aryl- bzw. Alkylarylreste mit 6 bis 20 C-Atomen, wobei die Alkylreste auch perfluoriert oder teilweise fluoriert sein können und n = 0 bis 50 bedeuten.

Langkettige Ester der allgemeinen Formel I, die als Comonomere eingebaut, in dem Copolymerisat für die Assoziation der Makromoleküle bei ihrer Anwendung in wäßriger Lösung und damit viskositätssteigernd, d.h. verdickend wirken, sind beispielsweise:

n-Octylmethacrylat, 2-Ethylhexylacrylat bzw. -methacrylat, n-Decylmethacrylat, n-Decylacrylat, Isodecylmethacrylat, Isoundecylmethacrylat, Dodecylmethacrylat, Octadecylmethacrylat, Octadecylacrylat, wobei die für die Esterherstellung verwendeten langkettigen Alkohole bevorzugt als synthetische Alkohole eingesetzt werden und diese meist Gemische verschiedener Alkohole im $C_8$- bis $C_{20}$-Bereich sind. Solche Alkohole sind im Handel beispielsweise unter Markennamen, wie ® Lorol, ® Alfol, ® Dobanol bekannt. Ein beispielsweise für die Herstellung von Isodecylmethacrylat brauchbarer technischer Alkohol, ist ein Gemisch aus isomeren Decylalkoholen mit einer mittleren C-Zahl, ( $\overline{C}$ ) , = 9,9 - 10,3. Weitere Beispiele für Monomere der allgemeinen Formel I, die im Copolymerisat eingebaut assoziativ wirken, sind:

Methacrylsäureester eines ethoxylierten $C_{16}$-$C_{18}$-Fettalkohlgemisches mit einem mittleren Ethoxylierungsgrad von 11 oder einem solchen von 25, Methacrylsäureester von 5-tert-Octylphenoxypolyethoxyethanol mit einem Ethoxylierungsgrad von 9 bis 10. Anstelle der Polyethoxypruppen können in I auch Polypropoxygruppen oder solche mit Ethoxy- und Propoxybausteinen gemischt aufgebauten Polyalkoxygruppen vorhanden sein.

Zur Herstellung der erfindungsgemäßen Copolymeren können die Mengen der Monomerkomponenten a), b) und c) in den beanspruchten Bereichen variiert werden. Sie können vorzugsweise bei a) 20 bis 80 Gew.-%, b) 10 bis 70 Gew.-% und c) 0,5 bis 5 Gew.-% betragen, wobei vor allem ganz besonders

bevorzugt sind für a) 30 bis 70 Gew.-%, b) 20 bis 60 Gew.-% und c) 0,5 bis 3 Gew.-%.

In untergeordneten Mengen, d.h. in Mengen von 0 bis ca. 20 Gew.-%, insbesondere in Mengen von 0 bis 10 Gew.-% des Copolymerisates, können an Stelle von Methylmethacrylat, dem essentiellen Monomeren des erfindungsgemäßen assoziativen Verdickungsmittels in Pulverform, weitere Methacrylsäurealkylester mit 2 bis 4 Kohlenstoffatomen im Alkylrest, und andere $\alpha,\beta$-ungesättigte polymerisierbare Verbindungen, wie z.B. Styrol oder Vinylester, eingesetzt werden. Auch in untergeordneten Mengen, d.h. in Mengen von 0 bis ca. 20 Gew.-%, insbesondere in Mengen von 0 bis 10 Gew.-% des Copolymerisats können mit den unter b) angegebenen Acrylsäure und Methacrylsäure auch andere Carbonsäuregruppen-haltige bzw. Carbonsäuregruppenbildende polymerisierbare Verbindungen, wie beispielsweise Maleinsäure, Maleinsäureanhydrid oder Crotonsäure, bei der Herstellung des Copolymerisates eingesetzt werden.

Bevorzugt für die Verwendung als assoziative Verdickungsmittel sind die erfindungsgemäßen Copolymerisate aus Methylmethacrylat, Methacrylsäure und den assoziativ wirkenden Komponenten, den $C_8$- bis $C_{20}$-Alkyl(meth)acrylaten oder Alkyl- bzw. Alkylarylpolyalkoxymethacrylaten, vor allem von $C_{12}$- bis $C_{18}$-Alkylpolyethoxymethacrylaten mit einem Ethoxylierungsgrad von 10 bis 30 Mol. Sie werden als verdickende Zusätze nur in geringen Mengen, d.h. in Mengen von 0,1 bis 10 Gew.-%, insbesondere in Mengen von 0,5 bis 5 Gew.-% benötigt, um wäßrigen Systemen die für ihren Verwendungszweck notwendigen rheologischen und physikalisch-chemischen Eigenschaften zu verleihen.

Die Herstellung der Copolymerisate auf Methylmethacrylat-Basis kann nach dem üblichen Verfahren durch radikalische Polymerisation der Monomeren in Substanz, in Lösung oder in Emulsion vorgenommen werden (vgl. H. Rauch-Puntigam, Th.Völker, Acryl- und Methacrylverbindungen, Springer Verlag, Berlin, 1967, insbesondere Seiten 203, 207, 230 -233, 238, 327).

Bevorzugt ist die Herstellung durch Emulsionspolymerisation. Diese wird in Gegenwart von ionischen oder nichtionischen Emulgatoren zur Emulgierung und zur Stabilisierung des entstehenden Polymerlatex durchgeführt. Mit wasserlöslichen Polymerisationsinitiatoren, wozu beispielsweise Alkali-oder Ammoniumpersulfat oder Redoxsysteme gehören, und die in Mengen von 0,02 bis etwa 2 Gew.-% bezogen auf die Monomeren angewandt werden, wird die Emulsionspolymerisation bei Temperaturen im Bereich von etwa 30 bis 100 Grad C durchgeführt.

Durch die Mitverwendung von Molekulargewichtsreglern während der Copolymerisation, wozu die Verbindungen mit radikalübertragenden Eigenschaften, vorzugsweise solche von ein- oder mehrfunktionellen Mercaptanen, wie z.B. 2-Ethylhexylthioglycolat, n-Butylmercaptan, n- bzw. t-Dodecylmercaptan, Pentaerythrittetrathioglycolat, gehören, lassen sich gezielt Molekulargewichte einstellen, die eine gezielte Einstellung der rheologischen Eigenschaften dieser Copolymerisate erlauben. Vorteilhaft werden die erfindungsgemäßen Verdickungsmittel als Copolymerisate mit Molekulargewichten Mw im Bereich von 10 000 bis 300 000, insbesondere im Bereich von 50 000 bis 300 000 hergestellt.

Die Copolymerisate können in ihrer freien Säureform hergestellt werden, oder auch schon in der meist für die Anwendung notwendigen Form als teilweise oder vollständig neutralisierte Produkte. Zur Anwendung kommen die erfindungsgemäßen Verdickungsmittel vor allem als Salze, insbesondere als Alkali-, Ammonium- oder Aminsalze.

Aus Lösungen oder Dispersionen von Acrylharzen mit niederer Mindestfilmbildungsteperatur, wie es beispielsweise die aus dem Stand der Technik bekannten Verdickungsmittel auf Ethylacrylat-Basis sind, lassen sich pulverförmige Produkte durch Sprühtrocknen nur mit Schwierigkeiten erhalten. Es bedarf dabei einer sorgfältigen Temperatursteuerung im Sprühturm, um unverglaste Polymerisatpulver zu erzeugen und um starke Ablagerungen im Flüssigkeitsverteiler und auf der Zerstäuberscheibe der Sprühtrocknungsanlagen zu vermeiden.

Als Maßnahme, solche Schwierigkeiten bei der Zerstäubung von temperatur- und scherempfindlichen wäßrigen Dispersionen oder wäßrigen Lösungen zu vermeiden, ist in der deutschen Patentanmeldung P 38 07 543.1 die Mitzerstäubung von Wasser in der Sprühtrocknungsanlage beschrieben.

Bei der Aufarbeitung der erfindungsgemäßen assoziativen Verdickungsmittel auf Methylmethacrylat-Basis zu pulverförmigen Produkten durch Sprühtrocknen, hat sich nun weiter ergeben, daß sich wäßrige Lösungen oder wäßrige Dispersionen dieser erfindungsgemäßen Copolymerisate wesentlich problemloser sprühtrocknen lassen als dies für die bisher als assoziative Verdickungsmittel bekannten Polymerisate möglich war. Die Sprühtrocknung läßt sich jetzt bei höherer Temperatur, beispielsweise mit mitgeführter warmer bis heißer Luft von ca. 70 bis ca. 180 Grad C, glatt, mit größerem Temperaturgradienten und mit wesentlich geringerer Gefahr zur Bildung von Ablagerungen, auch zu praktisch unverglasten Polymerisatpulvern durchführen, ohne daß es einer zusätzlichen Ausrüstung von herkömmlichen Sprühtrocknungsanlagen mit einer oder mehreren Leitungen und Austrittsöffnungen für zusätzliche Wasserzerstäubung bedarf.

Das sprühgetrocknete Polymerisatpulver besteht in der Regel aus Pulverkörnchen der Größe von etwa 20 bis 200 Mikrometer. Die assoziativen Verdickungsmittel in Pulverform haben Vorteile beim Versand

solcher Produkte, oder Vorteile für bestimmte Anwendungen, wie z.B. der Einarbeitung in Trockengemische.

BEISPIEL

In einem 2 l Reaktionsgefäß, ausgerüstet mit Rückflußkühler, Rührwerk und Zulaufgefäß, werden 0,02 g Triisobutylphenolpolyglykolethersulfat-Na-Salz (Ethoxylierungsgrad 7) und 0,22 g Ammoniumperoxodisulfat in 450 g entsalztem Wasser bei 20 Grad C gelöst.

In diese Lösung wird bei 80 Grad C unter Rühren eine Emulsion, bestehend aus:

421,0 g Methylmethacrylat
288,0 g Methacrylsäure
10,8 g Alkoxyethoxymethacrylat ($C_{16}$-$C_{18}$-Fettalkoholgemisch, mittlerer Ethoxylierungsgrad 11)
10,8 g Triisobutylphenolpolyglykolethersulfat-Na-Salz
2,9 g 2-Ethylhexylthioglykolat und
660,0 g entsalztes Wasser
innerhalb von 3 Stunden zugegeben.

Nach Zulaufende wird der Ansatz auf Raumtemperatur abgekühlt; hierbei erfolgt bei 70 Grad C die Zugabe von 0,45 g 1,4 Diisopropylbenzolhydroperoxid und 0,4 g Natriumhydroxymethylsulfinat. Dann wird die Dispersion filtriert. Der pH der ca. 40 %igen Dispersion beträgt 2,9.

Die Dispersion wird in einer Sprühtrocknungsanlage mittels einer Sprühscheibe versprüht und im Gleichstrom mit Luft von 160 Grad C getrocknet. Das Mengenverhältnis Dispersion zu Luft ist so eingestellt, daß das Sprühgut die Anlage bei einer Luftaustrittstemperatur von 75 Grad C in Form eines trocknen Pulvers verläßt.

**Ansprüche**

1. Assoziatives Verdickungsmittel auf Polymethacrylat-Basis in Pulverform, mit einem Molekulargewicht Mw von 10 000 bis 300 000, zur Verwendung in wäßrigen Systemen,
dadurch gekennzeichnet,
daß das Polymere durch Polymerisation aus
a) 20 bis 90 Gew.-% Methylmethacrylat,
b) 5 bis 80 Gew.-% Acrylsäure und/oder
Methacrylsäure und
c) 0,1 bis 10 Gew.-% langkettigen Estern der Acrylsäure und/oder Methacrylsäure, wobei die Säuregruppen auch teilweise oder vollständig durch Basenzugabe vor oder nach der Polymerisation neutralisiert sein können, hergestellt wird, und das Polymere durch Sprühtrocknung aus seiner Lösung oder Dispersion in Pulverform erhalten wird.

2. Assoziative Verdickungsmittel nach Anspruch 1, dadurch gekennzeichnet, daß die langkettigen Ester der Acrylsäure und/oder Methacrylsäure Verbindungen der allgemeinen Formel I

$$H_2C = \overset{R}{\overset{|}{C}} - \overset{O}{\overset{\|}{C}} - O -(- CH_2 - \overset{R_1}{\overset{|}{C}H} - O -)_n R_2 \qquad I$$

Sind, in der
R, $R_1$ = H oder $CH_3$
$R_2$ = $C_8$- bis $C_{20}$-Alkylreste oder Aryl- bzw. Alkylarylreste mit 6 bis 20 C-Atomen, wobei die Alkylreste auch perfluoriert oder teilweise fluoriert sein können, und n = 0 bis 50
bedeuten.

3. Assoziative Verdickungsmittel nach den Ansprüchen 1 und 2, dadurch gekennzeichnet, daß sie mit Verbindungen der Formel I, in der n = O und $R_2$ ein $C_8$-bis $C_{20}$-Alkylrest bedeuten, aufgebaut sind.

4. Assoziative Verdickungsmittel nach den Ansprüchen 1 und 2, dadurch gekennzeichnet, daß sie mit Verbindungen der Formel I, in der n eine Zahl zwischen 0 bis 50 ist und $R_2$ $C_8$- bis $C_{20}$-Alkylreste oder Arylbzw. Alkylarylreste mit 6 bis 20 C-Atomen bedeuten, aufgebaut sind.

5. Assoziative Verdickungsmittel nach den Ansprüchen 1 bis 4, dadurch gekennzeichnet, daß sie mit Verbindungen der Formel I nach Anspruch 3 und mit Verbindungen der Formel I nach Anspruch 4

aufgebaut sind.

6. Assoziative Verdickungsmittel nach den Ansprüchen 1 bis 5, dadurch gekennzeichnet, daß das Polymere aus

a) Methylmethacrylat, vorzugsweise in Mengen von 20 bis 80 Gew.-% und vor allem in Mengen von 30 bis 70 Gew.-%,

b) Acrylsäure und/oder Methacrylsäure, vorzugsweise in Mengen von 10 bis 70 Gew.-% und vor allem in Mengen von 20 bis 60 Gew.-% und

c) langkettigen Estern der Acrylsäure und/oder Methacrylsäure, vorzugsweise in Mengen von 0,5 bis 5 Gew.-% und vor allem in Mengen von 0,5 bis 3 Gew.-%, erhalten wird.

7. Assoziative Verdickungsmittel nach den Ansprüchen 1 bis 6, dadurch gekennzeichnet, daß neben Methylmethacrylat und Acrylsäure und/oder Methacrylsäure, in Mengen von 0 bis 10 Gew.-%, weitere polymerisierbare, $\alpha,\beta$-ungesättigte Verbindungen für die Polymerisatherstellung eingesetzt werden.

8. Assoziatives Verdickungsmittel nach den Ansprüchen 1 bis 7, dadurch gekennzeichnet, daß das Polymere durch Emulsionspolymerisation hergestellt ist.